# EUROPEAN PATENT APPLICATION

(11) **EP 4 207 013 A1**
(43) Date of publication of application: **05.07.2023**
(21) Application number: 21881567.8
(22) Date of filing: 16.06.2021
(51) Int. Cl.: G06Q 10/06

(54) **OBJECT QUANTITY DETERMINATION METHOD, APPARATUS, AND STORAGE MEDIUM**

(30) Priority: 20.10.2020 CN 202011125044
(71) Applicant: Beijing Wodong Tianjun Information Technology Co., Ltd., Beijing 100176 (CN); Beijing Jingdong Century Trading Co., Ltd., Beijing 100176 (CN)
(72) Inventor: YANG, Dan, Beijing 100176 (CN)
(74) Representative: Slingsby Partners LLP
(86) International application number: PCT/CN2021/100456
(87) International publication number: WO 2022/083145

(57) **Abstract**

Provided are an object quantity determination method, apparatus, and storage medium, said method comprising: receiving an allocation service call request from a first device, the allocation service call request comprising a service allocation identifier and allocation rule data of an object to be allocated, the first device being a device corresponding to an object allocation node (S101); according to a correlation between the stored service allocation identifier and allocation rule, obtaining a target allocation rule corresponding to the service allocation identifier of the object to be allocated (S102); according to the target allocation rule and allocation rule data, determining the quantity of objects to be allocated to each downstream node, and sending the quantity of objects to be allocated to each downstream node to the first device (S103). The invention enables a device corresponding to an object allocation node to allocate objects to be allocated; development of a code file is needed only once, reducing the cost of code development and maintenance, enhancing the reusability of an object quantity allocation functionality.

## Description

This application claims priority to Chinese Patent Application No. 202011125044.9, filed with China National Intellectual Property Administration on October 20, 2020 and entitled "METHOD AND APPARATUS FOR DETERMINING QUANTITY OF OBJECT, AND STORAGE MEDIUM", which is hereby incorporated by reference in its entirety.

### TECHNICAL FIELD

The present application relates to the field of Internet technology, and in particular, to a method and apparatus for determining a quantity of an object, and a storage medium.

### BACKGROUND

In a current supply chain system, more and more inventory nodes of goods are involved, and inventory nodes are, for example, suppliers, stores, intermediate warehouses, and the like. When the quantity of goods of a downstream node (i.e., a node to which goods are allocated) is insufficient, how to distribute the quantity of goods (i.e., goods distribution) for the downstream node is a problem that each inventory node has to face. For example, the suppliers need to distribute goods to a store intended for dispatching, the intermediate warehouses need to distribute goods to a store intended for allocating, and goods allocation may be required for goods allocation between the stores.

In the related art, each goods distributing node (including the inventory nodes or other nodes that need to distribute goods) needs to develop its own code file, so as to realize the distribution of goods after determining the quantity of goods distributed to the downstream node according to the quantity of goods in the goods distributing node and a pre-stored distribution rule, where distribution rules of different goods distributing nodes are different.

In the process of realizing the application, the inventor found that there are at least the following problems in the related art: each goods distributing node needs to develop its own code file, and the cost of code development and maintenance is high.

### SUMMARY

Embodiments of the present application provide a method and apparatus for determining a quantity of an object, and a storage medium, which are used to solve the problem of high cost caused by code development and maintenance in the existing goods distribution method.

According to a first aspect, an embodiment of the present application provides a method for determining a quantity of an object, including:
receiving a request for calling a distribution service sent by a first device, where the request for calling the distribution service includes distribution rule data and a business distribution identifier of a to-be-distributed object, and the first device is a device corresponding to an object distributing node;
acquiring a target distribution rule corresponding to the business distribution identifier of the to-be-distributed object according to a stored correspondence between a business distribution identifier and a distribution rule;
determining a quantity of the to-be-distributed object distributed to each downstream node according to the target distribution rule and the distribution rule data, and sending the quantity of the to-be-distributed object distributed to each downstream node to the first device.

Optionally, determining the quantity of the to-be-distributed object distributed to each downstream node according to the target distribution rule and the distribution rule data includes:
determining a distribution rule of each downstream node according to the target distribution rule, and determining distribution rule data of each downstream node according to the distribution rule data;
determining the quantity of the to-be-distributed object distributed to each downstream node according to the distribution rule of each downstream node, the distribution rule data of each downstream node and a total quantity of the to-be-distributed object.

The above embodiment of the present invention has the following advantages or beneficial effects: a server receives a request for calling a distribution service sent by a first device ; acquires a target distribution rule corresponding to the business distribution identifier of the to-be-distributed object according to a stored correspondence between business distribution identifiers and distribution rules; then determines a distribution rule of each downstream node according to the target distribution rule, and determines distribution rule data of each downstream node according to the distribution rule data; determines a quantity of a to-be-distributed object distributed to each downstream node according to the distribution rule of each downstream node, the distribution rule data of each downstream node and the total quantity of the to-be-distributed object; and finally sends the quantity of the to-be-distributed object distributed to each downstream node to the first device. Therefore, the distribution of the to-be-distributed object by the device corresponding to the object distributing node is realized, and different object distributing nodes may call a distribution function module set by the server, so as to realize the distribution of the to-be-distributed object(s) by the object distributing node, during which the development of a code file only needs to be performed once, thus reducing the cost of code development and maintenance, and enhancing the reusability of the function of distributing the quantity of the object(s).

Optionally, the method further includes:
pushing rule configuration information to the first device after receiving a request for configuring a distribution rule sent by the first device;
in response to an operation of a user selecting a distribution rule through a rule configuration page, acquiring a distribution rule selected by the user for the first device, where the rule configuration page is displayed by the first device according to the rule configuration information;
generating a corresponding business distribution identifier according to the distribution rule, and storing a correspondence between the business distribution identifier and the distribution rule;
sending the business distribution identifier to the first device.

The above embodiment of the present invention has the following advantages or beneficial effects: when distributing the quantity of the object(s) for the first time, the first device sends the distribution rule configuration request to the server; the server pushes the rule configuration information to the first device, and the first device receives the rule configuration information pushed by the server and displays the rule configuration page, so that the user may perform an operation of selecting the distribution rule through the rule configuration page displayed by the first device; in response to the operation, the server acquires the distribution rule selected by the user, and generates the corresponding business distribution identifier according to the distribution rule, then stores the correspondence between the business distribution identifier and the distribution rule; finally, the server sends the business distribution identifier to the first device, so that when the first device needs to distribute the quantity of the object(s), it may call the object distribution function according to the business distribution identifier and the distribution rule data, and different object distributing nodes may call the distribution function module set by the server, so as to realize the distribution of the to-be-distributed object(s) by the object distributing node, during which the development of the code file only needs to be performed once, thus reducing the cost of code development and maintenance, and enhancing the reusability of the function of distributing the quantity of the object(s).

Optionally, the distribution rule includes a distribution rule of at least one object type;
where generating the corresponding business distribution identifier according to the distribution rule includes:
generating a corresponding business distribution identifier according to the distribution rule of each object type.

The above embodiment of the present invention has the following advantages or beneficial effects: different distribution rules may be configured for different object types, and the distribution rule of each object type generates a corresponding business distribution identifier, which is flexible and may be adapted to more business scenarios.

Optionally, the rule configuration information includes a distribution rule option and an object distributing node option;
a distribution rule included in the distribution rule option is at least one of the following configuration rules:
distributing according to a proportion of a planned replenishment quantity of a downstream node, distributing according to a number of historical purchases of the downstream node, distributing according to a purchase quantity within a historical time period of the downstream node, distributing according to an average sales quantity within the historical time period of the downstream node, distributing according to an inventory quantity of the downstream node, and distributing according to a proportion of a predicted average sales quantity within a preset time of the downstream node.

Optionally, the rule configuration information further includes a priority configuration option of the downstream node.

The above embodiment of the present invention has the following advantages or beneficial effects: by increasing the priority configuration option of the downstream node, accordingly, the distribution rule may include multiple configuration rules and a priority of the downstream node, in the case that the quantity of the to-be-distributed object distributed to each downstream node cannot be determined according to the multiple configuration rules and the distribution rule data, the quantity of the to-be-distributed object distributed to each downstream node may be determined according to the priority of the downstream node and the total quantity of the to-be-distributed object, which is more flexible.

Optionally, the target distribution rule includes multiple configuration rules and a priority of the downstream node;
where determining the quantity of the to-be-distributed object distributed to each downstream node according to the target distribution rule and the distribution rule data includes:
in a case that the quantity of the to-be-distributed object distributed to each downstream node cannot be determined according to the multiple configuration rules and the distribution rule data, determining the quantity of the to-be-distributed object distributed to each downstream node according to the priority of the downstream node and a total quantity of the to-be-distributed object.

The above embodiment of the present invention has the following advantages or beneficial effects: in the case that the quantity of the to-be-distributed object distributed to each downstream node cannot be determined according to the multiple configuration rules and the distribution rule data, the quantity of the to-be-distributed object distributed to each downstream node may be determined according to the priority of the downstream node and the total quantity of the to-be-distributed object, which is more flexible.

According to a second aspect, an embodiment of the present application provides an apparatus for determining a quantity of an object, including:
a receiving module, configured to receive a request for calling a distribution service sent by a first device, where the request for calling the distribution service includes distribution rule data and a business distribution identifier of a to-be-distributed object, and the first device is a device corresponding to an object distributing node;
an acquiring module, configured to acquire a target distribution rule corresponding to the business distribution identifier of the to-be-distributed object according to a stored correspondence between a business distribution identifier and a distribution rule;
a processing module, configured to determine a quantity of the to-be-distributed object distributed to each downstream node according to the target distribution rule and the distribution rule data;
a sending module, configured to send the quantity of the to-be-distributed object distributed to each downstream node to the first device.

Optionally, the processing module is configured to: determine a distribution rule of each downstream node according to the target distribution rule, and determine distribution rule data of each downstream node according to the distribution rule data;
determine the quantity of the to-be-distributed object distributed to each downstream node according to the distribution rule of each downstream node, the distribution rule data of each downstream node and a total quantity of the to-be-distributed object.

Optionally, the sending module is further configured to push rule configuration information to the first device after the receiving module receives a request for configuring a distribution rule sent by the first device;
the processing module is further configured to: in response to an operation of a user selecting a distribution rule through a rule configuration page, acquire a distribution rule selected by the user for the first device, where the rule configuration page is displayed by the first device according to the rule configuration information;
generate a corresponding business distribution identifier according to the distribution rule, and store a correspondence between the business distribution identifier and the distribution rule;
the sending module is further configured to send the business distribution identifier to the first device.

Optionally, the distribution rule includes a distribution rule of at least one object type, and the processing module is configured to generate a corresponding business distribution identifier according to the distribution rule of each object type.

Optionally, the rule configuration information includes a distribution rule option and an object distributing node option;
a distribution rule included in the distribution rule option is at least one of the following configuration rules:
distributing according to a proportion of a planned replenishment quantity of a downstream node, distributing according to a number of historical purchases of the downstream node, distributing according to a purchase quantity within a historical time period of the downstream node, distributing according to an average sales quantity within the historical time period of the downstream node, distributing according to an inventory quantity of the downstream node, and distributing according to a proportion of a predicted average sales quantity within a preset time of the downstream node.

Optionally, the rule configuration information further includes a priority configuration option of the downstream node.

Optionally, the target distribution rule includes multiple configuration rules and a priority of the downstream node, and the processing module is configured to:
in a case that the quantity of the to-be-distributed object distributed to each downstream node cannot be determined according to the multiple configuration rules and the distribution rule data, determine the quantity of the to-be-distributed object distributed to each downstream node according to the priority of the downstream node and a total quantity of the to-be-distributed object.

According to another aspect, an embodiment of the present application provides a server, including: a memory and a processor;
the memory is a memory for storing processor executable instructions;
where the processor is configured to:
   receive a request for calling a distribution service sent by a first device, where the request for calling the distribution service includes distribution rule data and a business distribution identifier of a to-be-distributed object, and the first device is a device corresponding to an object distributing node;
   acquire a target distribution rule corresponding to the business distribution identifier of the to-be-distributed object according to a stored correspondence between a business distribution identifier and a distribution rule;
   determine a quantity of the to-be-distributed object distributed to each downstream node according to the target distribution rule and the distribution rule data, and send the quantity of the to-be-distributed object distributed to each downstream node to the first device.

According to another aspect, an embodiment of the present application provides a computer-readable storage medium storing computer-executable instructions, when being executed by a processor, the computer-executable instructions are used to implement the method for determining a quantity of an object according to the first aspect and various possible designs.

In the method and apparatus for determining a quantity of an object, and the storage medium, the server receives the request for calling the distribution service sent by the first device, where the request for calling the distribution service includes the distribution rule data and the business distribution identifier of the to-be-distributed object; and acquires the target distribution rule corresponding to the business distribution identifier of the to-be-distributed object according to the stored correspondence between the business distribution identifiers and the distribution rules; then determines the quantity of the to-be-distributed object distributed to each downstream node according to the target distribution rule and the distribution rule data; and finally sends the quantity of the to-be-distributed object distributed to each downstream node to the first device. When the object distributing node needs to distribute the quantity of the object(s), the device corresponding to the object distributing node (i.e. the first device) realizes the calling of the distribution function module set by the server by sending the request for calling the distribution service to the server, so that the distribution of the to-be-distributed object by the device corresponding to the object distributing node is realized, and different object distributing nodes may call the distribution function module set by the server, so as to realize the distribution of the object distributing node(s) to the to-be-distributed object, during which the development of a code file only needs to be performed once, thus reducing the cost of code development and maintenance, and enhancing the reusability of the function of distributing the quantity of the object(s).

### BRIEF DESCRIPTION OF THE DRAWINGS

The accompanying drawings, which are incorporated in and constitute a part of the description, illustrate embodiments consistent with the present disclosure and serve to explain the principles of the present disclosure together with the description.
FIG. 1 is a schematic diagram of an application scenario of a method for determining a quantity of an object provided by an embodiment of the present application.
FIG. 2 is a flowchart of an embodiment of a method for determining a quantity of an object provided by an embodiment of the present application.
FIG. 3 is a flowchart of an embodiment of a method for determining a quantity of an object provided by an embodiment of the present application.
FIG. 4 is a flowchart of an embodiment of a method for determining a quantity of an object provided by an embodiment of the present application.
FIG. 5 is a schematic diagram of a rule configuration page.
FIG. 6 is a schematic diagram of a rule configuration page.
FIG. 7 is a schematic structural diagram of an apparatus for determining a quantity of an object provided by an embodiment of the present application.
FIG. 8 is a schematic structural diagram of a server provided by an embodiment of the present application.

Through the above accompanying drawings, specific embodiments of the present application have been shown, which will be described in more detail hereinafter. These drawings and written descriptions are not intended to limit the scope of the present application in any way, but to explain the disclosed concepts to those skilled in the art by referring to the specific embodiments.

### DESCRIPTION OF EMBODIMENTS

Exemplary embodiments will be described in detail herein, examples of which are illustrated in the accompanying drawings. The following description refers to the accompanying drawings in which the same numbers in different drawings represent the same or similar elements unless otherwise represented. The implementations described in the following exemplary embodiments do not represent all implementations consistent with the present application. Rather, they are merely examples of apparatuses and methods consistent with some aspects of the present application as detailed in the appended claims.

First of all, some terms in the embodiments of the present application are explained below, so as to facilitate the understanding for those skilled in the art.
1. Object distributing node refers to a node with object distribution requirement, where the object herein may be, for example, goods, and the object distributing node may be, for example, an inventory node or other nodes that need to distribute goods (hereinafter referred to as a goods distributing node), for example, a supplier, a store, or an intermediate warehouse may be an object distributing node. If the object is goods, the corresponding object distributing node may be referred to as a goods distributing node. It may be understood that the object may also be other items.
2. Downstream node refers to a node to which an object is distributed, for example, a supplier needs to distribute goods to a distributed store, then the supplier is an object distributing node, the store is a downstream node, for another example, an intermediate warehouse needs to distribute goods to a distributed store, then the intermediate warehouse is an object distributing node, the store is a downstream node, and generally there are one or more downstream nodes.

Before introducing the technical solutions of the embodiments of the present application, firstly, the problems existing in the related art and the technical conception process of the embodiments of the present application are explained.

In the related art, each goods distributing node needs to develop its own code file, and a software module formed by the code file is set in a device corresponding to the goods distributing node, and the device corresponding to the goods distributing node determines the quantity of goods distributed to a downstream node according to the quantity of goods in the goods distributing node and a pre-stored distribution rule. Since each distributing node needs to develop its own code file, the cost of code development and maintenance is high. In order to solve this problem, embodiments of the present application provide a method and apparatus for determining a quantity of an object, and a storage medium. By setting a universal and configurable distribution function module in a server, the distribution function module may be a software module or a hardware module, and when an object distributing node needs to distribute the quantity of the object(s), the device corresponding to the object distributing node may call the distribution function module through the server. Specifically, when the quantity of the object(s) needs to be distributed, the device corresponding to the object distributing node sends a request for calling a distribution service to the server, where the request for calling the distribution service includes distribution rule data and a business distribution identifier of a to-be-distributed object; then the server determines the quantity of the to-be-distributed object distributed to each downstream node according to the request for calling the distribution service, and sends the quantity of the to-be-distributed object distributed to each downstream node to the device corresponding to the object distributing node. Therefore, the distribution of the to-be-distributed object by the device corresponding to the object distributing node is realized, and different object distributing nodes may call the distribution function module, so as to realize the distribution of the to-be-distributed object(s) by the object distributing node, during which the development of a code file only needs to be performed once, thus reducing the cost of code development and maintenance, and enhancing the reusability of the function of distributing the quantity of the object(s).

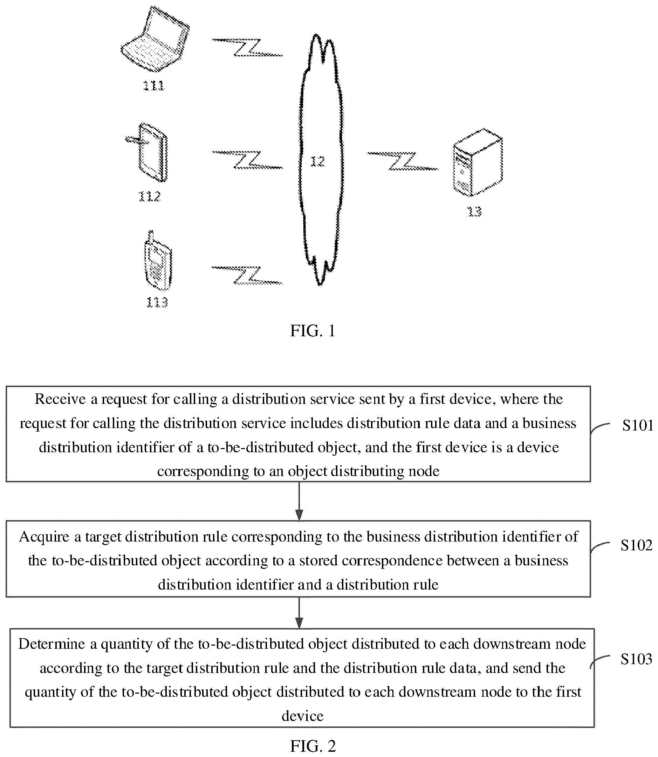

Exemplary, FIG. 1 is a schematic diagram of an application scenario of a method for determining a quantity of an object provided by an embodiment of the present application. As shown in FIG. 1, the application scenario may include at least one terminal device (FIG. 1 shows three terminal devices, which are respectively a terminal device 111, a terminal device 112 and a terminal device 113), a network 12 and a server 13. Each terminal device and the server 13 may communicate through the network 12.

Optionally, the user may use the terminal device, specifically, the quantity of the object(s) may be determined through a website or an Application (Application, APP) installed on the terminal device, and the terminal device in the embodiment of the present application is a device corresponding to an object distributing node. For example, a supplier needs to distribute goods to a store intended for dispatching, for another example, an intermediate warehouse needs to distribute goods to a store intended for allocating, both of which are scenarios where the object distributing node (such as a supplier or an intermediate warehouse) needs to distribute the quantity of the object(s). For example, when the object distributing node needs to distribute the quantity of the object(s), it may specifically send a request for calling a distribution service to the server through the terminal device, where the request for calling the distribution service includes distribution rule data and a business distribution identifier of a to-be-distributed object; after the server determines the quantity of the to-be-distributed object(s) distributed to each downstream node according to the request for calling the distribution service, the server sends the quantity of the to-be-distributed object(s) distributed to each downstream node to the terminal device. The server may specifically execute the method for determining the quantity of the object(s) provided by the embodiment of the present application described below, so as to realize the distribution of the to-be-distributed object(s) by the object distributing node, for example, the distribution of goods by the goods distributing node.

It should be noted that FIG. 1 is simply a schematic diagram of an application scenario provided by the embodiment of the present application. The embodiments of the present application do not limit the devices included in FIG. 1 and the positional relationship among devices in FIG. 1. For example, in the application scenario shown in FIG. 1, a data storage device may be further included, the data storage device may be an external memory relative to the server 13, or may be an internal memory integrated in the server 13.

The technical solutions of the present application and how the technical solutions of the embodiments of the present application solve the above technical problems will be described in detail with specific embodiments. The following specific embodiments may be combined with each other, and the same or similar concepts or processes may not be repeated in some embodiments. The embodiments of the present application will be described below with reference to the accompanying drawings.

FIG. 2 is a flowchart of an embodiment of a method for determining a quantity of an object provided by an embodiment of the present application, and the execution body of the embodiment may be a server, as shown in FIG. 2, the method in the present embodiment may include:
S101, receive a request for calling a distribution service sent by a first device, where the request for calling the distribution service includes distribution rule data and a business distribution identifier of a to-be-distributed object, and the first device is a device corresponding to an object distributing node.

Specifically, the first device is the device corresponding to the object distributing node, which is a node with an object (for example, which may be goods) distribution requirement, for example, an inventory node or other nodes that need to distribute goods, and the object distributing node is specifically a supplier, a store or an intermediate warehouse.

When the object distributing node needs to distribute the quantity of the object(s), the first device corresponding to the object distributing node may send the request for calling the distribution service to the server, and after the server receives the request for calling the distribution service, the process of S102 is executed.

The request for calling the distribution service includes the distribution rule data and the business distribution identifier of the to-be-distributed object, and the business distribution identifier may be a coded character string or other identifiers. The distribution rule data is data corresponding to a distribution rule. For example, if the distribution rule is to perform distribution according to a proportion of a planned replenishment quantity of a downstream node, the corresponding distribution rule data is the proportion of the planned replenishment quantity of the downstream node, for example, there are two downstream nodes, and the proportion of the planned replenishment quantity of the two downstream nodes is, for example, 1:1 or 1:2, etc. For another example, the distribution rule is to distribute according to an average sales quantity within a historical time period of the downstream node, and the corresponding distribution rule data is the average sales quantity (sales volume) within a historical time period of the downstream node, for example, the distributed quantity may be N times the average sales quantity, and N may be 1 or other numerical values. For another example, the distribution rule refers to distributing based on an inventory quantity of the downstream node, and the corresponding distribution rule data is the inventory quantity of the downstream node, if the inventory quantity is small, the distributed quantity is large, and if the inventory quantity is large, the distributed quantity is small.

The first device is the device corresponding to the object distributing node, the business distribution identifier(s) corresponds to the distribution rule(s), if the first device knows the distribution rule, it knows the distribution rule data accordingly. When sending the request for calling the distribution service to the server, the first device carries the business distribution identifier and the distribution rule data corresponding to the distribution rule in the request for calling the distribution service and sends the same to the server.

S102, acquire a target distribution rule corresponding to the business distribution identifier of the to-be-distributed object according to a stored correspondence between a business distribution identifier and a distribution rule.

Specifically, the server stores the correspondence between different business distribution identifiers and distribution rules, the correspondence may be, for example, a mapping relationship table. The server may search, from the stored correspondence between the business distribution identifiers and the distribution rules, the distribution rule corresponding to the business distribution identifier of the to-be-distributed object, that is, the target distribution rule. Table 1 below is an example of a correspondence between business distribution identifiers and distribution rules:

**Table 1**

| Business distribution identifier | Distribution rule |
|---|---|
| Business distribution identifier 1 | Distributing according to a proportion of a planned replenishment quantity of a downstream node |
| Business distribution identifier 2 | Distributing according to an average sales quantity within a historical time period of a downstream node |
| Business distribution identifier 3 | Distributing according to a purchase quantity within a historical time period of a downstream node |
| Business distribution identifier 4 | Distributing according to a proportion of a predicted average sales quantity within a preset time of a downstream node |

As shown in Table 1, take 1, 2, 3 and 4 as examples for the business distribution identifiers, and the business distribution identifiers may also be character strings. It may be understood that the business distribution identifiers of different first devices are unique. For example, if the business distribution identifier of the to-be-distributed object is the business distribution identifier 1, and the distribution rule corresponding to the business distribution identifier 1 is to distribute according to a proportion of a planned replenishment quantity of a downstream node, then the target distribution rule is to distribute according to a proportion of a planned replenishment quantity of a downstream node.

Optionally, the distribution rule may also include a priority of a downstream node. For example, when there are three downstream nodes, the distribution rule may also include the priorities of the downstream nodes. When the priorities of the downstream nodes are included, when the quantity of the to-be-distributed object(s) distributed to each downstream node cannot be determined according to the distribution rule, the quantity of the to-be-distributed object(s) distributed to each downstream node may be determined according to the priorities of the downstream nodes and the total quantity of the to-be-distributed object(s).

Further, the object may be goods, for example, and different objects have different types, for example, goods may be divided into fruits, clothes and other types, so different object types may have different business distribution identifiers, that is, different object types may have different distribution rules or the same distribution rule, so that the quantity of the object(s) may be distributed according to the object type.

S103, determine a quantity of the to-be-distributed object distributed to each downstream node according to the target distribution rule and the distribution rule data, and send the quantity of the to-be-distributed object distributed to each downstream node to the first device.

Specifically, after the target distribution rule is determined, the quantity of the to-be-distributed object distributed to each downstream node may be determined according to the target distribution rule and the distribution rule data. For example, the target distribution rule is to distribute according to a proportion of a planned replenishment quantity of a downstream node, and the corresponding distribution rule data is the proportion of the planned replenishment quantity of the downstream node. For example, if there are two downstream nodes and the proportion of the planned replenishment quantity of the two downstream nodes is 1:1, for example, it may be determined that the quantity of the to-be-distributed objects distributed to each of the two downstream nodes is half of the total quantity of the to-be-distributed objects, according to the total quantity of the to-be-distributed objects and the proportion of the planned replenishment quantity of the two downstream nodes of 1:1.

In the method for determining a quantity of an object provided by the embodiment, the server receives the request for calling the distribution service sent by the first device, where the request for calling the distribution service includes the distribution rule data and the business distribution identifier of the to-be-distributed object; and acquires the target distribution rule corresponding to the business distribution identifier of the to-be-distributed object according to the stored correspondence between the business distribution identifiers and the distribution rules; then determines the quantity of the to-be-distributed object distributed to each downstream node according to the target distribution rule and the distribution rule data; and finally sends the quantity of the to-be-distributed object distributed to each downstream node to the first device. When the object distributing node needs to distribute the quantity of the object(s), the device corresponding to the object distributing node (i.e. the first device) realizes the calling of the distribution function module set by the server by sending the request for calling the distribution service to the server, so that the distribution of the to-be-distributed object by the device corresponding to the object distributing node is realized, and different object distributing nodes may call the distribution function module set by the server, so as to realize the distribution of the object distributing node(s) to the to-be-distributed object, during which the development of a code file only needs to be performed once, thus reducing the cost of code development and maintenance, and enhancing the reusability of the function of distributing the quantity of the object(s).

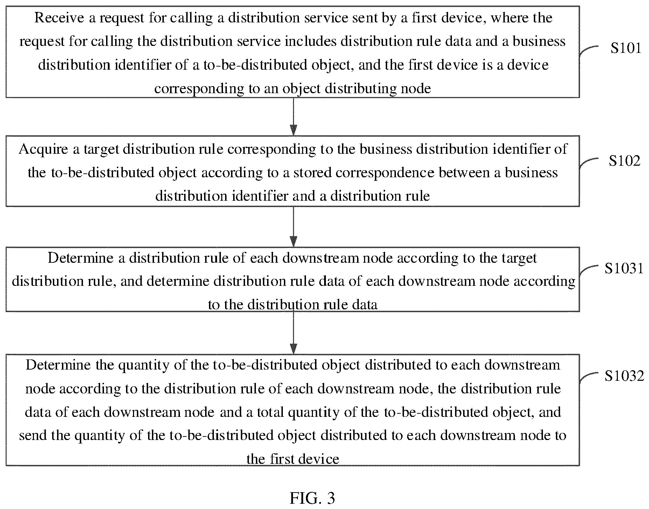

FIG. 3 is a flowchart of an embodiment of a method for determining a quantity of an object provided by an embodiment of the present application, and the execution body of the embodiment may be a server, as shown in FIG. 3, the method in the embodiment is further implemented as an implementable manner on the basis of the method shown in FIG. 2. In S103, where determining the quantity of the to-be-distributed object distributed to each downstream node according to the target distribution rule and the distribution rule data may specifically be:
S1031, determine a distribution rule of each downstream node according to the target distribution rule, and determine distribution rule data of each downstream node according to the distribution rule data.

Specifically, since the downstream node of the object distributing node may be one or more, the distribution rule of each downstream node is determined according to the target distribution rule, and the distribution rule data of each downstream node is determined according to the distribution rule data. For example, there are three downstream nodes of the object distributing node, and the target distribution rule is to distribute according to a proportion of a planned replenishment quantity of the downstream node, then it is determined that the distribution rule of each downstream node is to distribute according to a proportion of planned replenishment quantity of each of the three downstream nodes. For example, the distribution rule data is 1:2:3, and the distribution rule data of each of the three downstream nodes is 1/6, 2/6 and 3/6 respectively. For another example, there are three downstream nodes of the object distributing node, and the target distribution rule is to distribute according to the number of historical purchases of the downstream node, then it is determined that the distribution rule of each downstream node is to distribute according to the historical purchases of each of the three downstream nodes, and the distribution rule data is the number of historical purchases of the downstream node, the distribution rule data of each of the three downstream nodes is the historical purchase of each downstream node respectively.

S1032, determine the quantity of the to-be-distributed object distributed to each downstream node according to the distribution rule of each downstream node, the distribution rule data of each downstream node and a total quantity of the to-be-distributed object, and then send the quantity of the to-be-distributed object distributed to each downstream node to the first device.

Specifically, for each downstream node of the object distributing node, after determining the distribution rule and distribution rule data of each downstream node through S1031, then the quantity of the to-be-distributed object distributed to each downstream node may be determined according to the distribution rule of each downstream node, the distribution rule data of each downstream node and a total quantity of the to-be-distributed object.

In the embodiment, the server receives the request for calling the distribution service sent by the first device; acquires the target distribution rule corresponding to the business distribution identifier of the to-be-distributed object according to the stored correspondence between business distribution identifiers and distribution rules; then determines the distribution rule of each downstream node according to the target distribution rule, determines the distribution rule data of each downstream node according to the distribution rule data, and determines the quantity of the to-be-distributed object distributed to each downstream node according to the distribution rule of each downstream node, the distribution rule data of each downstream node and the total quantity of the to-be-distributed object; and finally sends the quantity of the to-be-distributed object distributed to each downstream node to the first device. Therefore, the distribution of the to-be-distributed object by the device corresponding to the object distributing node is realized, and different object distributing nodes may call a distribution function module set by the server, so as to realize the distribution of the to-be-distributed object(s) by the object distributing node, during which the development of the code file only needs to be performed once, thus reducing the cost of code development and maintenance, and enhancing the reusability of the function of distributing the quantity of the object(s).

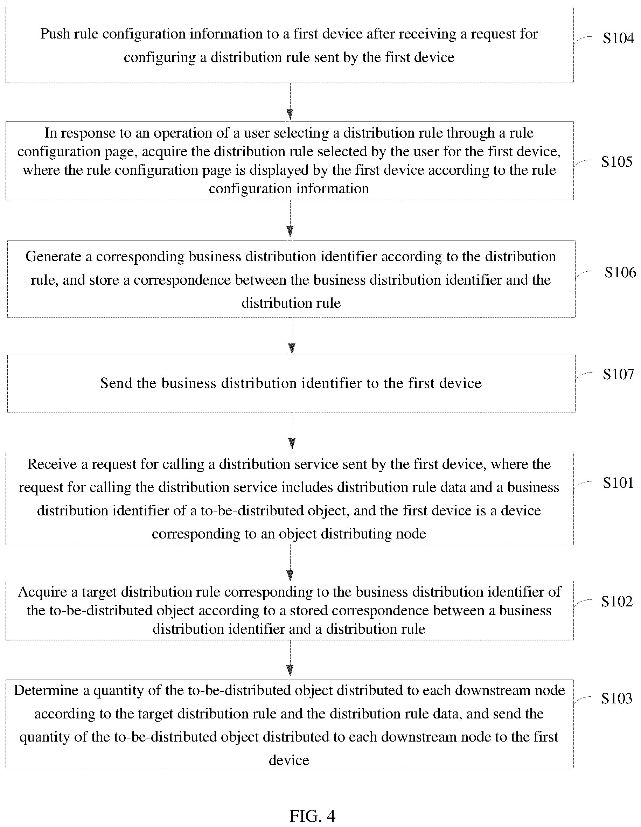

In the embodiments shown in FIG. 2 or FIG. 3, the correspondence between the business distribution identifiers and the distribution rules is stored in the server. When the object distributing node distributes goods for the first time, the user may configure, by means of the first device, the distribution rule through a rule configuration page displayed by rule configuration information pushed by the server, to obtain a correspondence between business distribution identifiers and distribution rules, and store the correspondence in the server; then the server sends a unique business distribution identifier generated after the configuration of the distribution rule is completed to the object distributing node. Subsequently, when the object distributing node needs to distribute the quantity of the object(s), the distribution function module of the server may be directly called according to the business distribution identifier for realizing the distribution of the quantity of the object(s). The configuration process of the distribution rule is described in detail below with reference to FIG. 4.

FIG. 4 is a flowchart of an embodiment of a method for determining a quantity of an object provided by an embodiment of the present application, and the execution body of the embodiment may be a server, as shown in FIG. 4, on the basis of the method shown in FIG. 2 or FIG.3, the method in the embodiment further includes:
S104, push rule configuration information to the first device after receiving a request for configuring a distribution rule sent by the first device.

Specifically, when distributing goods for the first time, the first device may display a rule configuration page to the user according to the rule configuration information pushed by the server, and the user operates the first device to configure the distribution rule. Optionally, the first device may send a request for configuring a distribution rule to the server through a hyper text transfer protocol (Hyper Text Transfer Protocol, HTTP), and the server pushes the rule configuration information to the first device. The first device receives the rule configuration information pushed by the server and displays the rule configuration page, for example, the first device may be displayed on a display screen of the first device through a browser.

Optionally, the rule configuration information includes a distribution rule option and an object distributing node option, and a distribution rule included in the distribution rule option is at least one of the following configuration rules:
distributing according to a proportion of a planned replenishment quantity of a downstream node, distributing according to the number of historical purchases of the downstream node, distributing according to a purchase quantity within a historical time period of the downstream node, distributing according to an average sales quantity within the historical time period of the downstream node, distributing according to an inventory quantity of the downstream node, and distributing according to a proportion of a predicted average sales quantity within a preset time of the downstream node. It can be understood that the content displayed on the rule configuration page is the content included in the rule configuration information, for example, the distribution rule option and the object distributing node option may be displayed.

The distribution rule may include one or more configuration rules. Optionally, the rule configuration information may further include a priority configuration option of the downstream node. By increasing the priority configuration option of the downstream node, accordingly, the distribution rule may include multiple configuration rules and the priority of the downstream node. In the case that the quantity of the to-be-distributed object distributed to each downstream node cannot be determined according to the multiple configuration rules and the distribution rule data, the quantity of the to-be-distributed object distributed to each downstream node may be determined according to the priority of the downstream node and the total quantity of the to-be-distributed object, which is more flexible.

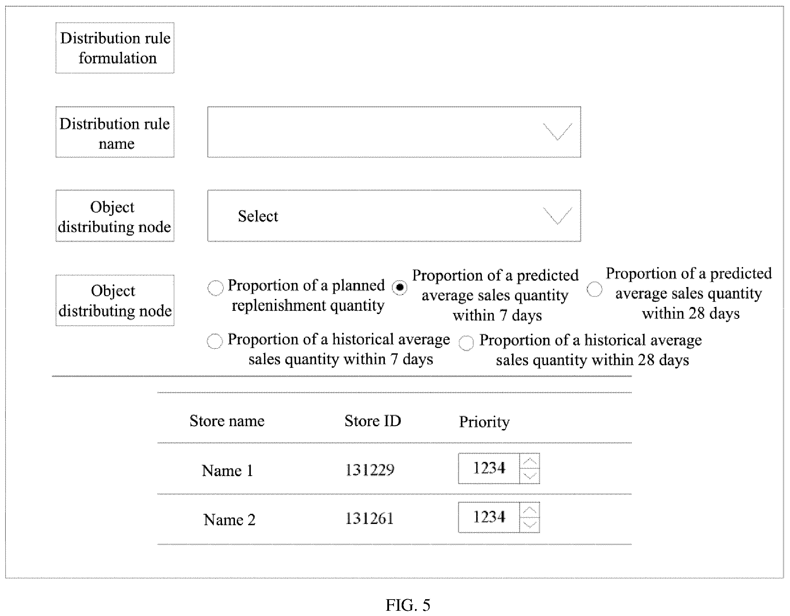

FIG. 5 is a schematic diagram of a rule configuration page. As shown in FIG. 5, the content displayed on the rule configuration page may include a distribution rule name (which is optional and may be a user input name), an object distributing node option (for a user to check), and a distribution rule option (for a user to check), where the object distributing node option may include, for example, a name of an intermediate warehouse, a name of a supplier, a name of a store, etc. The distribution rule option include, for example, a proportion of a planned replenishment quantity, a proportion of a predicted average sales quantity within 7 days, a proportion of a predicted average sales quantity within 28 days, a proportion of a historical average sales quantity within 7 days, and a proportion of a historical average sales quantity within 28 days. Optionally, as shown in FIG. 5, the content displayed on the rule configuration page may further include a priority configuration option of the downstream node, for example, the priority configuration option of the downstream node includes a name of a store, a store identification (ID) and a priority option. For example, there are four downstream nodes, and there are four corresponding priorities. The above options are all used for the user to select and configure the distribution rule.

S105, in response to an operation of a user selecting a distribution rule through a rule configuration page, acquire the distribution rule selected by the user for the first device, where the rule configuration page is displayed by the first device according to the rule configuration information.

Specifically, for example, the user performs the operation of selecting the distribution rule through the rule configuration page, and the server responds to the operation and acquires the distribution rule selected by the user.

S106, generate a corresponding business distribution identifier according to the distribution rule, and store a correspondence between the business distribution identifier and the distribution rule.

Specifically, for the same object distributing node, distribution rules of different object types may be the same, and in an implementable manner, distribution rules of different object types may also be different. When the distribution rules of different object types are different, the distribution rule includes a distribution rule of at least one object type, and correspondingly, where the generating a corresponding business distribution identifier according to the distribution rule may be: generating a corresponding business distribution identifier according to the distribution rule of each object type.

When the server stores the correspondence between the business distribution identifier(s) and the distribution rule(s), the correspondence may be specifically stored in a database.

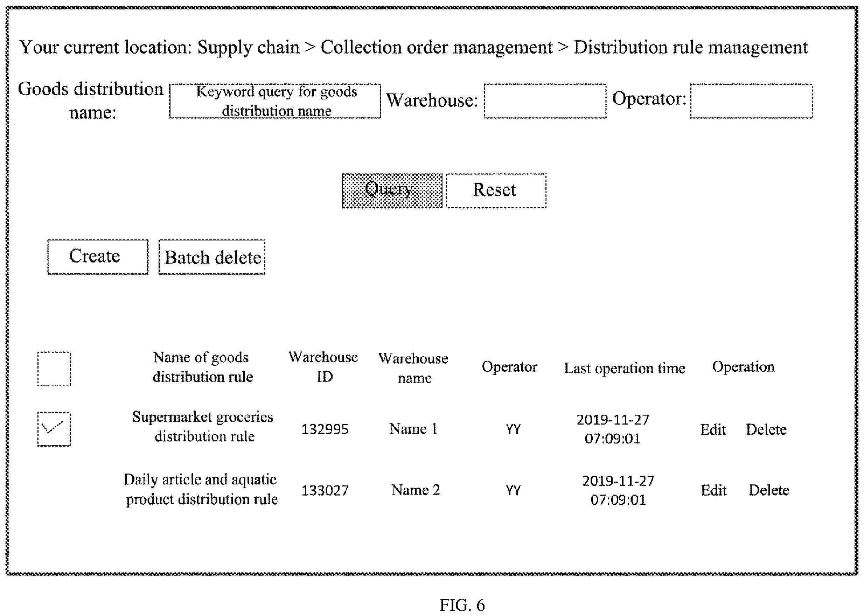

FIG. 6 is a schematic diagram of a rule configuration page, as shown in FIG. 6, for example, when the object is a commodity, the distribution rule may be referred to as a goods distribution rule, the types of the commodity may include supermarket groceries, life and aquatic products or the like. Take these two commodity types as an example, each of these two commodity types corresponds to a distribution rule. The distribution rules shown in FIG. 6 are goods distribution rules, for example, names of goods distribution rules are supermarket groceries distribution rule and daily article and aquatic product distribution rule respectively. Each distribution rule respectively corresponds to a warehouse identification (ID), a warehouse name, an operator, a last operation time, as well as an operation option, and the operation option includes edition and deletion of each distribution rule. A goods distribution name may be input to query the created distribution rule, a distribution rule corresponding to a new commodity type may also be newly created, or the created distribution rules may be deleted in batches.

In the embodiment, different distribution rules may be configured for different object types, and the distribution rule of each object type generates a corresponding business distribution identifier, which is flexible and may be adapted to more business scenarios.

S107, send the business distribution identifier to the first device.

In the method for determining the quantity of the object(s) provided by the embodiment, when the first device distributes the quantity of the object(s) for the first time, the first device sends the request for configuring a distribution rule to the server; the server pushes the rule configuration information to the first device, and the first device receives the rule configuration information pushed by the server and displays the rule configuration page, so that the user may perform the operation of selecting the distribution rule through the rule configuration page displayed by the first device; in response to the operation, the server acquires the distribution rule selected by the user, and generates the corresponding business distribution identifier according to the distribution rule, then stores the correspondence between the business distribution identifier and the distribution rule; finally, the server sends the business distribution identifier to the first device, so that when the first device needs to distribute the quantity of the object(s), it may call the object distribution function according to the business distribution identifier and the distribution rule data, and different object distributing nodes may call the distribution function module set by the server, so as to realize the distribution of the to-be-distributed object(s) by the object distributing node, during which the development of a code file only needs to be performed once, thus reducing the cost of code development and maintenance, and enhancing the reusability of the function of distributing the quantity of the object(s).

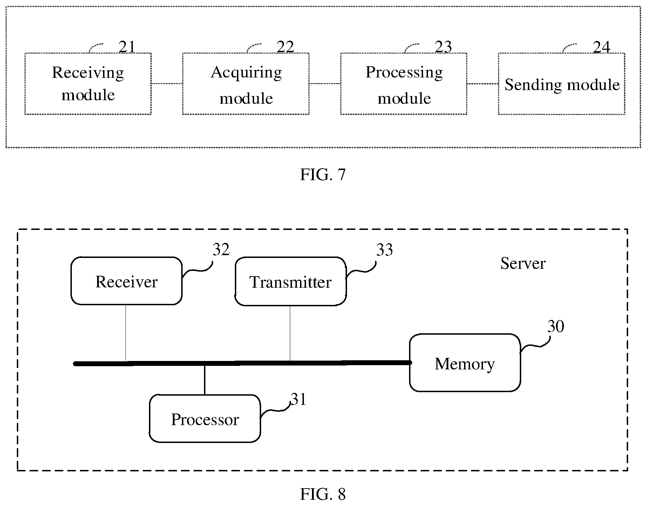

FIG. 7 is a schematic structural diagram of an apparatus for determining a quantity of an object provided by an embodiment of the present application, as shown in FIG. 7, the apparatus of the embodiment may include a receiving module 21, an acquiring module 22, a processing module 23 and a sending module 24,
where the receiving module 21 is configured to receive a request for calling a distribution service sent by a first device, where the request for calling the distribution service includes distribution rule data and a business distribution identifier of a to-be-distributed object, and the first device is a device corresponding to an object distributing node.

The acquiring module 22 is configured to acquire a target distribution rule corresponding to the business distribution identifier of the to-be-distributed object according to a stored correspondence between a business distribution identifier and a distribution rule.

The processing module 23 is configured to determine a quantity of the to-be-distributed object distributed to each downstream node according to the target distribution rule and the distribution rule data.

The sending module 24 is configured to send the quantity of the to-be-distributed object distributed to each downstream node to the first device.

Optionally, the processing module 23 is configured to: determine a distribution rule of each downstream node according to the target distribution rule, and determine distribution rule data of each downstream node according to the distribution rule data;
determine the quantity of the to-be-distributed object distributed to each downstream node according to the distribution rule of each downstream node, the distribution rule data of each downstream node and a total quantity of the to-be-distributed object.

Optionally, the sending module 24 is further configured to push rule configuration information to the first device after the receiving module receives a request for configuring a distribution rule sent by the first device;
the processing module 23 is further configured to: in response to an operation of a user selecting a distribution rule through a rule configuration page, acquire a distribution rule selected by the user for the first device, where the rule configuration page is displayed by the first device according to the rule configuration information;
generate a corresponding business distribution identifier according to the distribution rule, and store a correspondence between the business distribution identifier and the distribution rule;
the sending module 24 is further configured to send the business distribution identifier to the first device.

Optionally, the distribution rule includes a distribution rule of at least one object type, and the processing module 23 is configured to generate a corresponding business distribution identifier according to the distribution rule of each object type.

Optionally, the rule configuration information includes a distribution rule option and an object distributing node option;
a distribution rule included in the distribution rule option is at least one of the following configuration rules:
distributing according to a proportion of a planned replenishment quantity of a downstream node, distributing according to a number of historical purchases of the downstream node, distributing according to a purchase quantity within a historical time period of the downstream node, distributing according to an average sales quantity within the historical time period of the downstream node, distributing according to an inventory quantity of the downstream node, and distributing according to a proportion of a predicted average sales quantity within a preset time of the downstream node.

Optionally, the rule configuration information further includes a priority configuration option of the downstream node.

Optionally, the target distribution rule includes multiple configuration rules and a priority of the downstream node, and the processing module 23 is configured to:
in a case that the quantity of the to-be-distributed object distributed to each downstream node cannot be determined according to the multiple configuration rules and the distribution rule data, determine the quantity of the to-be-distributed object distributed to each downstream node according to the priority of the downstream node and a total quantity of the to-be-distributed object.

The apparatus provided by the embodiment of the present application may execute the above-mentioned method embodiment, for its specific implementation principle and technical effect, reference may be made to the above-mentioned method embodiment, which is not repeated here.

It should be noted that it should be understood that the division of each module of the above apparatus is only a division of logical function, which may be completely or partially integrated into a physical entity or physically separated in actual implementation. And these modules may be all implemented in the form of software called by a processing element; and may also be all implemented in the form of hardware. Also, some modules may also be implemented in the form of software called by the processing element, and some modules may be implemented in the form of hardware. For example, the processing module may be an independent processing element, may also be integrated in a chip of the apparatus, and may also be stored in a memory of the apparatus in the form of program code, and the program code is called by a processing element of the apparatus and executes the functions of the processing module. The implementation of other modules is similar to that of the processing module. In addition, all or some of these modules may be integrated together or implemented independently. The processing element herein may be an integrated circuit with signal processing capability. In the process of implementation, each step of the above method or each module above may be completed through an instruction in the form of software or a hardware integrated logic circuit in a processor element.

For example, the above modules may be one or more integrated circuits configured to implement the above method, such as one or more application specific integrated circuits (application specific integrated circuit, ASIC), one or more digital signal processors (digital signal processor, DSP), or one or more field programmable gate arrays (field programmable gate array, FPGA), etc. For another example, when one of the above modules is implemented in the form of a processing element calling program code, the processing element may be a general-purpose processor, such as a central processing unit (central processing unit, CPU) or other processors that may call the program code. For another example, these modules may be integrated together, which are implemented in the form of system-on-a-chip (system-on-a-chip, SOC).

The above embodiments may be implemented in whole or in part by software, hardware, firmware or any combination thereof. When the embodiments are implemented using software, all or in part may be implemented in the form of a computer program product. The computer program product includes one or more computer instructions. When the computer program instructions are loaded and executed on a computer, processes or functions according to the embodiments of the present application are all or partially generated. The computer may be a general purpose computer, a special purpose computer, a computer network, or other programmable apparatus. The computer instructions may be stored in a computer-readable storage medium or transmitted from one computer-readable storage medium to another. For example, the computer instructions may be transmitted from one website, computer, server or data center to another website, computer, server or data center in a wired way (such as through a coaxial cable, an optical fiber, a digital subscriber line (DSL)) or in a wireless way (such as in the form of infrared, wireless, microwave, etc.). The computer-readable storage medium may be any available medium that a computer can access or a data storage device including a server, a data center, etc., which is integrated with one or more available mediums. The available medium may be a magnetic medium (e.g., a floppy disk, a hard disk, a magnetic tape), an optical medium (e.g., DVD), or a semiconductor medium (e.g., a solid state disk solid state disk (SSD)) and the like.

FIG. 8 is a schematic structural diagram of a server provided by an embodiment of the present application, as shown in FIG. 8, the server of the embodiment includes a memory 30 and a processor 31, where,
the memory 30 is a memory for storing processor executable instructions;
where the processor 31 is configured to: receive a request for calling a distribution service sent by a first device, where the request for calling the distribution service includes distribution rule data and a business distribution identifier of a to-be-distributed object, and the first device is a device corresponding to an object distributing node; acquire a target distribution rule corresponding to the business distribution identifier of the to-be-distributed object according to a stored correspondence between a business distribution identifier and a distribution rule; determine a quantity of the to-be-distributed object distributed to each downstream node according to the target distribution rule and the distribution rule data; and send the quantity of the to-be-distributed object distributed to each downstream node to the first device.

Optionally, the server of the embodiment may further include a receiver 32 and a transmitter 33. Optionally, the receiver 32 may be configured to receive the request for calling the distribution service sent by the first device, and the transmitter 33 may be configured to send the quantity of the to-be-distributed object distributed to each downstream node to the first device.

Embodiments of the present application further provide a computer-readable storage medium storing computer-executable instructions, when being executed on a computer, the computer-executable instructions cause the computer to execute the method according to the above embodiment.

Other embodiments of the present application will be apparent to those skilled in the art from consideration of the description and practice of the invention disclosed herein. The present application is intended to cover any variations, uses, or adaptations of the present application, which follow the general principles of the present application and include common knowledge or conventional technical means in the art not disclosed in the present application. The description and examples are to be regarded as exemplary only, with a true scope and spirit of the present application indicated by the following claims.

It should be understood that the present application is not limited to the precise structure described above and shown in the accompanying drawings, and various modifications and changes may be made without departing from its scope. The scope of the present application is limited only by the appended claims.

## Claims

1. A method for determining a quantity of an object, comprising:
receiving a request for calling a distribution service sent by a first device, wherein the request for calling the distribution service comprises distribution rule data and a business distribution identifier of a to-be-distributed object, and the first device is a device corresponding to an object distributing node;
acquiring a target distribution rule corresponding to the business distribution identifier of the to-be-distributed object according to a stored correspondence between a business distribution identifier and a distribution rule;
determining a quantity of the to-be-distributed object distributed to each downstream node according to the target distribution rule and the distribution rule data, and sending the quantity of the to-be-distributed object distributed to each downstream node to the first device.

2. The method according to claim 1, wherein determining the quantity of the to-be-distributed object distributed to each downstream node according to the target distribution rule and the distribution rule data comprises:
determining a distribution rule of each downstream node according to the target distribution rule, and determining distribution rule data of each downstream node according to the distribution rule data;
determining the quantity of the to-be-distributed object distributed to each downstream node according to the distribution rule of each downstream node, the distribution rule data of each downstream node and a total quantity of the to-be-distributed object.

3. The method according to claim 1 or 2, wherein the method further comprises:
pushing rule configuration information to the first device after receiving a request for configuring a distribution rule sent by the first device;
in response to an operation of a user selecting a distribution rule through a rule configuration page, acquiring a distribution rule selected by the user for the first device, wherein the rule configuration page is displayed by the first device according to the rule configuration information;
generating a corresponding business distribution identifier according to the distribution rule, and storing a correspondence between the business distribution identifier and the distribution rule;
sending the business distribution identifier to the first device.

4. The method according to claim 3, wherein the distribution rule comprises a distribution rule of at least one object type;
wherein generating the corresponding business distribution identifier according to the distribution rule comprises:
generating a corresponding business distribution identifier according to the distribution rule of each object type.

5. The method according to claim 3, wherein the rule configuration information comprises a distribution rule option and an object distributing node option;
a distribution rule comprised in the distribution rule option is at least one of the following configuration rules:
distributing according to a proportion of a planned replenishment quantity of a downstream node, distributing according to a number of historical purchases of the downstream node, distributing according to a purchase quantity within a historical time period of the downstream node, distributing according to an average sales quantity within the historical time period of the downstream node, distributing according to an inventory quantity of the downstream node, and distributing according to a proportion of a predicted average sales quantity within a preset time of the downstream node.

6. The method according to claim 5, wherein the rule configuration information further comprises a priority configuration option of the downstream node.

7. The method according to claim 1, wherein the target distribution rule comprises multiple configuration rules and a priority of the downstream node;
wherein determining the quantity of the to-be-distributed object distributed to each downstream node according to the target distribution rule and the distribution rule data comprises:
in a case that the quantity of the to-be-distributed object distributed to each downstream node cannot be determined according to the multiple configuration rules and the distribution rule data, determining the quantity of the to-be-distributed object distributed to each downstream node according to the priority of the downstream node and a total quantity of the to-be-distributed object.

8. An apparatus for determining a quantity of an object, comprising:
a receiving module, configured to receive a request for calling a distribution service sent by a first device, wherein the request for calling the distribution service comprises distribution rule data and a business distribution identifier of a to-be-distributed object, and the first device is a device corresponding to an object distributing node;
an acquiring module, configured to acquire a target distribution rule corresponding to the business distribution identifier of the to-be-distributed object according to a stored correspondence between a business distribution identifier and a distribution rule;
a processing module, configured to determine a quantity of the to-be-distributed object distributed to each downstream node according to the target distribution rule and the distribution rule data;
a sending module, configured to send the quantity of the to-be-distributed object distributed to each downstream node to the first device.

9. A server, comprising: a memory and a processor;
the memory is a memory for storing processor executable instructions;
wherein the processor is configured to:
receive a request for calling a distribution service sent by a first device, wherein the request for calling the distribution service comprises distribution rule data and a business distribution identifier of a to-be-distributed object, and the first device is a device corresponding to an object distributing node;
acquire a target distribution rule corresponding to the business distribution identifier of the to-be-distributed object according to a stored correspondence between a business distribution identifier and a distribution rule;
determine a quantity of the to-be-distributed object distributed to each downstream node according to the target distribution rule and the distribution rule data, and send the quantity of the to-be-distributed object distributed to each downstream node to the first device.

10. A computer-readable storage medium storing computer-executable instructions, when being executed by a processor, the computer-executable instructions are used to implement the method for determining a quantity of an object according to any one of claims 1 to 7.
